# EUROPEAN PATENT APPLICATION

(11) **EP 2 717 215 A1**
(43) Date of publication of application: **09.04.2014**
(21) Application number: 13187142.8
(22) Date of filing: 02.10.2013
(51) Int. Cl.: G06Q 30/02

(54) **Method and apparatus for optimizing message delivery in recommender systems**

(30) Priority: 04.10.2012 US 201213645271
(71) Applicant: Palo Alto Research Center Incorporated, Palo Alto, California 94304 (US)
(72) Inventor: Bart, Evgeniy, Sunnyvale, CA 94086 (US); Zhang, Rui, San Francisco, CA 94105 (US); Bellotti, Victoria M., San Francisco, CA 94110 (US); Brdiczka, Oliver, Mountain View, CA 94040 (US)
(74) Representative: Lord, Michael

(57) **Abstract**

One embodiment of the present invention provides a system for optimizing the performance of a recommendation engine by generating an optimal recommendation time window. During operation, the system receives user click-through behavior on past recommendations and current user information, such as demographics and location. The system also receives information on one or more offers. The system determines the appropriate user-group for each user, and appropriate offer-group for each offer. The system then generates an optimal time period for a given recommendation for a given user and offer, wherein the optimal recommendation time window is the period when the offer is most likely to be accepted.

## Description

### Field

The present disclosure relates to a recommender system. More specifically, the present disclosure relates to a recommender system which generates an optimal recommendation time window for each user related to a particular offer.

### Related Art

As recommender systems become ubiquitous, customers routinely expect recommendations for products, information, coupons, and other materials, based on their preferences. Businesses use such recommendations to generate new revenue, to increase customer satisfaction, and to attract new and retain existing customers. The performance of these recommenders depends on the relevance of their recommendations. Too many irrelevant recommendations are perceived as a nuisance, and may decrease rather than improve customer satisfaction. This is particularly true in the case of increasingly widespread active recommender systems, where the system initiates contact with the customer (e.g., via an SMS or email message).

How relevant a particular recommendation is to a customer depends on several factors. One universally acknowledged factor is "material relevance;" which refers to whether the customer is in general interested in the material being recommended. For example, recommending an Italian restaurant to a person who does not like Italian food is likely to always be irrelevant. Another important factor is the timing of the recommendation. For example, recommending discounted airline tickets to a person who regularly travels to Europe is materially relevant; however, if the recommendation is made after the customer has already made a reservation, it becomes not actionable. Conversely, recommending a restaurant coupon several weeks in advance is unlikely to be acted upon, because many customers make dining decisions on the spot and are unlikely to remember a recommendation from too long ago. As another example, recommendations received while the customer is otherwise occupied (e.g., driving or in a meeting) may be distracting and cause dissatisfaction.

As related to this invention, the term "timing" will be understood to mean not only the absolute time (such as "2 pm PDT on Jul 1, 2012"), but also relative time (such as "20 minutes after arriving to work"), or more generally any time when a set of conditions hold true, such as "when the customer is within one mile of a Best Buy store on a weekend." The term "time window" will be understood to mean any combination of time periods, not necessarily consecutive or all of the same type.

From a business standpoint, more relevant recommendations drive up revenue resulting from customers acting upon offers and eliminate costs related to sending irrelevant offers. This capability is critical for a range of businesses, which include both advertising networks, as well as individual companies trying to improve their customers' experience.

However, the technical problem of recommendation timing is, to a significant extent, ignored today. One approach to avoid customer dissatisfaction is limiting the number of recommendations made in a given time period (for example, to no more than two offers per week). Some companies decide on this limit themselves, while others allow customers to select the limit. The hope is that even if the offers are irrelevant, the small number that is delivered will not cause too much dissatisfaction. The disadvantage of this approach is that customers who receive mostly irrelevant offers may still opt out of the program. On the other hand, limiting the number of offers artificially (rather than by relevance) may cause relevant offers to not be delivered.

Another approach is based on "geo-fencing," i.e., delivering recommendations for locations that are nearby. The drawback of this approach is that physical proximity is a very poor approximation of relevance. For example, a recommendation for an apparel store in a nearby mall is irrelevant to a person who comes to that mall to shop for electronics, to dine, or because they work at the mall.

Most existing recommenders are based on material relevance only, even when their recommendations vary with time. For example, seasonal items (such as Christmas gifts) are recommended during certain time periods because customers' needs change during these periods, rather than because of customers' decision-making styles. As a result, during holiday seasons, all customers receive recommendations for holiday items, regardless of a particular customer's decision-making style. Thus, there exists a significant technical problem underlying the efficiency of delivered recommendations, so as to provide an automated method of providing a user with relevant data which is selected and delivered to that user for optimal usage.

### SUMMARY

One embodiment of the present invention provides a system for optimizing the performance of a recommendation engine by generating an optimal recommendation time window. During operation, the system receives any available pertinent data about the users (such as demographic information, current time and location, device and plan they use for internet access, etc.), as well as any available historical information about user's preferences (such as user click-through behavior on past recommendations and other relevant data). Note that not all of this data needs to be available for all users; partial data can be handled as well. In particular, it is common that newly joined users do not have any historical click-through data. The system also receives similar information on one or more offers, including the type of product or service offered, discount percentage, venue location, offer expiration date, historical user click-through data on this and similar offers, etc. Again, not all information needs to be available. The system assigns the users to user-groups and the offers to offer-groups. The system then generates user receptivity windows for each user, wherein user receptivity windows are time periods where a user is likely to be receptive to a recommendation. The system also generates offer time windows for each offer, wherein offer time windows are time periods during which an offer recommendation is likely to succeed. Next, for each combination of user and offer, the system generates an optimal time period for a recommendation from the interaction of the user time window and the offer time window. In the simplest case, the interaction may be the intersection (if any) of the two time windows.

In a variation of this embodiment, no separate user receptivity windows and offer time windows are generated; rather, for each combination of a user group and an offer group, a single receptivity window is generated that determines when a user from that user group is likely to be receptive to an offer from that offer group.

In a variation on this embodiment, generating a user receptivity window comprises applying a mapping function from user's pertinent data (such as demographics, device data, and historical click-through behavior) to time windows appropriate for the user.

In a variation on this embodiment, determining offer time window comprises applying a mapping function from offer information to time windows pertaining to an offer's validity.

In a variation on this embodiment, assignment to user groups comprises identifying properties associated with the user preferences and grouping users based on identical or similar properties. Some example properties can be "users who need recommendations in advance to act upon them," i.e., thorough planners, and "users those who rarely plan and need recommendations at the very moment they execute an activity to act upon them," or "spur-of-the-moment" planners.

In a variation on this embodiment, assignment to offer groups comprises identifying properties associated with a respective offer's appeal to trigger decisions and grouping the offers based on the identified properties. Properties for offers can be, for example, "offers that appeal to spontaneous decisions, such as ice cream discounts" or "near-term offers" and "offers that generally need to be recommended in advance to be effective, such as airline tickets" or "far-term offers."

In a variation on this embodiment, generating an optimal recommendation time window for a user and an offer comprises: assigning a weight to each user group, assigning a weight to each offer group, determining a weight matrix, wherein the user groups correspond to one dimension of the matrix and the offer groups correspond to the other dimension; wherein each element in the matrix is a combined weight obtained by multiplying a user-group weight and an offer-group weight; for each combination of a user group and an offer group, incrementing the merit of all time slots determined by that combination by the combination's weight, and finally selecting time slots in the decreasing order of merit.

In a variation of this embodiment, generating an optimal recommendation time window for a user and an offer comprises: calculating one or more variables for each user, calculating one or more variables for each offer, and determining an optimal recommendation time window by using a regression on these variables, where the parameters of the regression, as well as possibly the variables to be computed, are determined in the training stage.

### BRIEF DESCRIPTION OF THE FIGURES

FIG. 1 illustrates a computing environment in which a recommender system resides, in accordance with an embodiment of the present invention.

FIG. 2 represents an exemplary recommendation system which generates an optimal recommendation time window for each user, in accordance with one embodiment of the present invention.

FIG. 3 represents an exemplary block diagram illustrating the operation of an optimal recommendation time window generation engine, in accordance with one embodiment of the present invention.

FIG. 4 presents a flow chart illustrating an exemplary process of determining an optimal recommendation time window for each user and offer pair, in accordance with one embodiment of the present invention.

FIG. 5 presents a flow chart illustrating an exemplary process of assigning user groups based on preferences, in accordance with an embodiment of the present invention.

FIG. 6 represents an exemplary computer and communication system which facilitates determining optimal recommendation time window, in accordance with an embodiment of the present invention.

### DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not limited to the embodiments shown, but is to be accorded the widest scope consistent with the claims.

The data structures and code described in this detailed description are typically stored on a computer-readable storage medium, which may be any device or medium that can store code and/or data for use by a computer system. This includes, but is not limited to, volatile memory, non-volatile memory, magnetic and optical storage devices such as disk drives, magnetic tape, CDs (compact discs), DVDs (digital versatile discs or digital video discs), or other media capable of storing computer readable media now known or later developed.

### Overview

In embodiments of the present invention, the problem of generating time-aware recommendations is solved by determining an appropriate time window for making a given recommendation to a given customer. The solution concerns the selection and timing of data delivery. The present inventive system analyzes pertinent user information, such as demographics, current location, device used, and the click-through behavior on past recommendations. The system then assigns the users into user-groups and the merchandize or service offers into offer-groups. Based on the analysis and the assignments, the system generates a receptivity window during which a given user is most likely to respond to the given offer.

In this disclosure historical information related to a user refers to a user's past behavior towards one or more recommendations, as well as any additional information that may be available about the user, for example, traces of locations visited in the past (which the user may choose to make available via GPS or cell tower triangulation). In particular, click-through is understood to mean not just the information about offers user clicked on in the past, but also the time when these clicks occurred, as well as any available accompanying information, such as the user's location at the time of click (which may be available via GPS, or wireless tower geolocation, or even as the street address of the store the customer made purchase at), the user's activity at the time of the click (which may be determined, for example, by using a smartphone's accelerometer, microphone, or camera, or by examining the user's internet browsing history prior to the time of the click, or examining other applications that were active on the user's computer of smartphone), etc. In addition, information on an offer pertains to the validity of the offer, the type of product or service offered, discount percentage, and so on.

### Exemplary Computer and Communication System

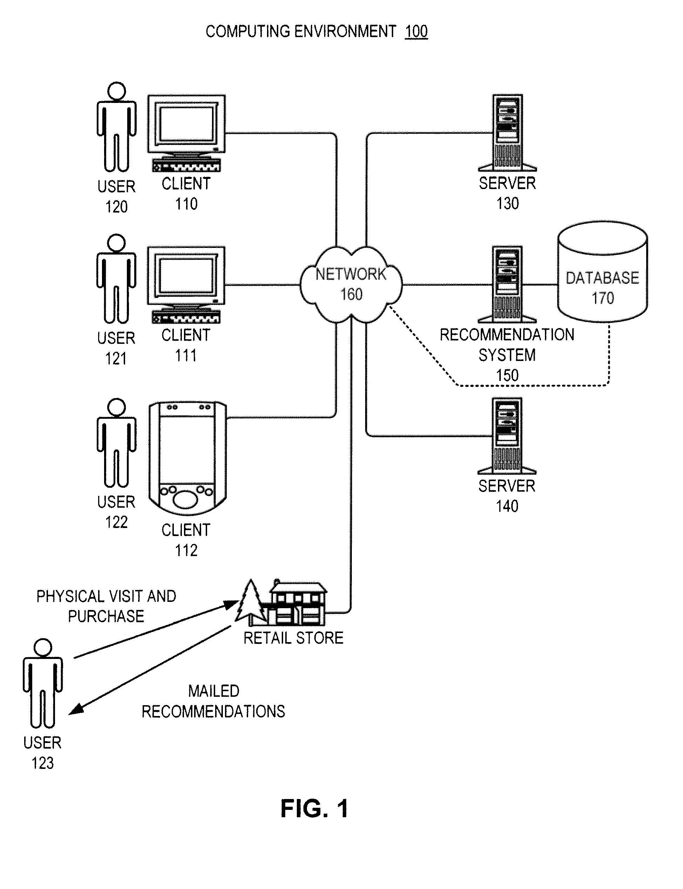

FIG. 1 illustrates a computing environment 100 in which a recommendation system resides, in accordance with an embodiment of the present invention. Computing environment 100 includes a number of computer systems, which can generally include any type of computer system based on a microprocessor, a mainframe computer, a digital signal processor, a portable computing device, a personal organizer, a smartphone, a device controller, or a computational engine within an appliance. More specifically, referring to FIG. 1, computing environment 100 includes clients 110-112, users 120- 123, servers 130-150, network 160, and database 170.

Clients 110-112 can include any node on a network including a mechanism for communicating across the network. In embodiments of the present invention, users 120-123 can generate click-through information and other preference information through the client devices 110-112. Some users may lack any computational devices or network connectivity; for these users, the offers may be sent via traditional mail, and purchase information would replace the click-through information.

Similarly, servers 130-150 can generally include any node on a network including a mechanism for servicing requests from a client for computational and/or data storage resources. A database 170 may be connected to the network 160 directly or via one or more of the servers. In embodiments of the present invention, one or more of the servers can function as a recommendation system (150).

Network 160 can include any type of wired or wireless communication channel capable of coupling together computing nodes. This includes, but is not limited to, a local area network, a wide area network, or a combination of networks. In one embodiment of the present invention, network 160 can be part of the Internet, or include phone and cellular phone networks.

Database 170 can include any type of system for storing data in volatile and/or non-volatile storage. This includes, but is not limited to, systems based upon magnetic, optical, or magneto-optical storage devices, as well as storage devices based on flash memory and/or battery-backed up memory. In embodiments of the present invention, database 170 can store information about the users and the offers which are processed to generate optimized recommendations.

Note that different embodiments of the present invention may use different configurations, and are not limited to the configuration illustrated in computing environment 100.

Recommender system 150 generates the optimized recommendation time window for each user and offer, based on a set of rules that assign users and offers to groups, and another set of rules that determined the optimal time window for each group. Details about how the system determines the user receptivity windows are described in the following sections.

### User Receptivity Windows

In some embodiments of the present invention, the recommender system determines a general user receptivity window based on the available user information, such as demographics, current location, device used, and historical click-through information. A user receptivity window is the period during which a user is likely to be receptive to a broad range of recommendations. The advantage of a general user receptivity window (rather than an offer-specific receptivity window for a user) is that it needs to be determined only once, and works for a wide variety of offers. The system can determine a user receptivity window based on a set of rules such as "users who are employed do not want to be disturbed during normal working hours." These rules can be designed manually, or in some embodiments can be inferred automatically by analyzing the available data. In one embodiment, this inference is performed by using a probabilistic model that predicts whether the user will click on an offer based on parameters such as absolute time, relative time, and various other conditions, including conditions based on location, and inferring the optimal parameters of that probabilistic model by optimizing its performance on the historical data for which the user behavior data is available. The system can also map available data about the user to the time windows appropriate for that user. This would allow a high level of customization. For example, users who are fond of Italian food and who browse the Internet during the lunch hour may be more receptive to a dinner deal from a nearby Italian restaurant recommended during the lunch hour.

Furthermore, the system can identify groups of users with similar preferences, and assign users to these groups. The system then determines, for each group, the time windows for every user in that group. This option may be preferable when the available data about users is limited, because assigning a user to an appropriate group requires less data than determining an optimal recommendation time window for the user. Once users are assigned to groups, the data from all users may be combined to overcome the limited data problem. The system may assign users to groups based on external attributes (such as demographics), or on the historical behavior data, or both. The assignment itself may be based either on clustering (i.e. comparing the data available about each user and grouping together users with similar data), or on classification (where a mapping function is used that maps from the user data to the appropriate group). Furthermore, it is possible to combine the two approaches, so that the groups are initially obtained using clustering, but then a mapping function is automatically constructed that assigns users to groups based on a subset of the data. This option in particular would solve the "cold start" problem, providing meaningful recommendations for new users who do not have any recorded historical data in the system. Examples of user groups that can be identified are "thorough planners" (users who need recommendations in advance to act upon them) and "spur-of-the-moment users" (those who rarely plan and need recommendations at the very moment they execute an activity to act upon them). Note that although in some embodiments each group may contain multiple users, in other embodiments the groups may only contain a single user; in this manner, the same group-based framework can be used for both group-based, as well as individual-based recommendations.

The system can also combine the two aforementioned methods and issue highly personalized recommendations for users for whom a significant amount of data is available, and more generic recommendations for users for whom little or no data is available.

The system can also use various properties of past behavior to indicate user receptivity. For example, receptivity windows can include time periods during which the current user, or similar users from the same user group, has clicked on offers similar to the offer currently under consideration. Receptivity windows can also include periods when the user is not engaged, such as when one is browsing the web for recreational purposes.

### Offer Time Windows

In general, the system determines an offer time window based on information about the offers. A general offer time window is a time period during which an offer is likely to be acted upon by a majority of users. Similarly to user time windows, the system can either determine offer-specific time windows, or assign offers to groups and determine group-specific time windows, or combine the two approaches. The system can determine offer groups using similar techniques as for user groups. Example offer groups can be "near-term offers" (those that appeal to spontaneous decisions, such as ice cream discounts) and "far-term offers" (those that generally need to be recommended in advance to be effective, such as airline tickets). Note that as with user groups, although in some embodiments each offer group may contain multiple offers, in other embodiments the groups may only contain a single offer; in this manner, the same group-based framework can be used for both group-based, as well as individual offer-based recommendations.

### Interactions and Overlap between User/Offer Time Windows

In one embodiment of the present invention, the system determines an optimal recommendation window for a given user and offer through overlap between user receptivity window and offer time window. The system makes the recommendation if there is an overlap between the two, and only during the overlap period.

Another possibility is to take into account more complex interactions between user preference and offer properties. This may mean the interaction between an individual user and a specific offer, or the interaction between user groups and offer groups, if such groups are modeled. For example, users in the "thorough planners" group may want all their offers (both near-term and far-term) to be delivered as far in advance as possible, while users in the "spur-of-the-moment" group may want the "near-term" offers delivered close to the time of activity, but still want the "far-term" offers delivered in advance. As another example, customers who go on one long vacation in the summer may want their vacation-related recommendations scheduled differently from customers who go on several short vacations around holidays. In both cases, the optimal window of delivery depends both on the user type and the offer type.

These interactions can be modeled by determining a separate recommendation time window for each combination of a user group and an offer group, or for each combination of an individual user and offer. The main advantage of this approach is that more elaborate interactions between user preferences and offer properties can be taken into account. For example, many people are 'thorough' about some things and 'spontaneous' about others; modeling their preferences for each type of offer separately will increase the accuracy of the recommendations. These time windows will be determined in a manner similar to the general user time windows, except that the data only pertaining to the combination of a single user group and an offer group, or a combination of an individual user and offer, will be used. Note again that although in some embodiments each user group may contain multiple users and each offer group may contain multiple offers, in other embodiments the groups may only contain a single user or offer each; in this manner, the same group-based framework can be used for both group-based, as well as individual-based recommendations.

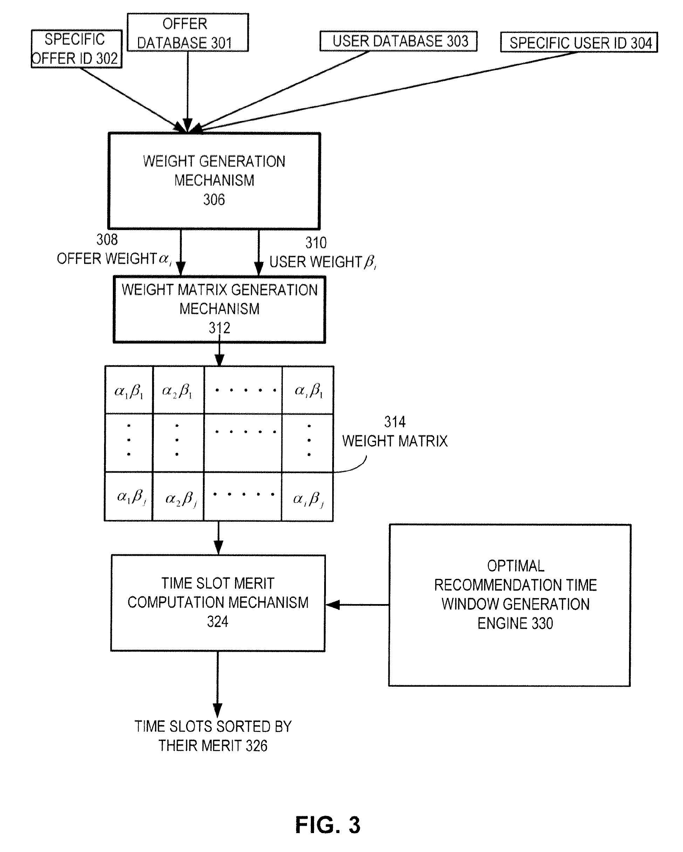

Rather than perform a hard assignment of users and offers to groups, the system can instead use soft assignments based on weights assigned to user groups and offer groups. This is particularly useful when it is difficult to decide on a single 'correct' group for a given user or offer. Weights are assigned to user groups based on the probability or likelihood that the user belongs to a given group. For example, it may not be entirely clear whether a particular user is "spur-of-the moment" planner or "long-term" planner, but the evidence supports the "spur-of-the-moment" possibility more strongly. In this case, the "spur-of-the-moment planners" group would receive a higher weight compared with the "long-term planners". Similar weights are assigned to offer groups. Many standard ways of assigning these weights exist. In the case of a probabilistic model, they can simply be probabilities of the user or offer belonging to each group. The system generates a combined weight matrix with one dimension of the matrix being the user groups and another dimension being the offer groups. Each element in the matrix is the corresponding combined weight generated by appropriately combining the respective user and offer weight. More details on the weight matrix are described in conjunction with FIG. 3.

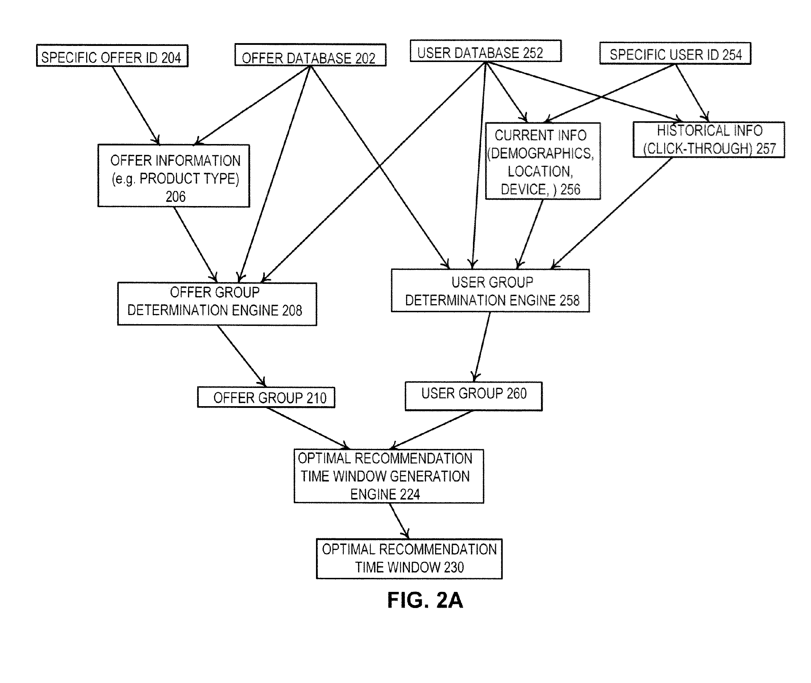

FIG. 2A presents a block diagram for the optimal recommendation window determination system, in accordance with an embodiment of the present invention. In this example, an offer-group determination engine 208 receives offer information 206 about specific offer 204 from an offer database 202. Offer determination engine 208 then generates an offer group 210 based on the offer's ability to trigger decisions, possibly by using additional data from both the offer database 202, and the user database 252. Similarly, a user-group determination engine 258 receives current information 256 and historical information 257 about a specific user 254 from a user database 252. The user-group determination engine 258 then determines the appropriate user group 260, possibly by using additional information from both the offer database 202 and the user database 252. Based on the offer group 210 and the user group 260, the optimal recommendation time window generation engine 224 then determines the optimal recommendation time window 230.

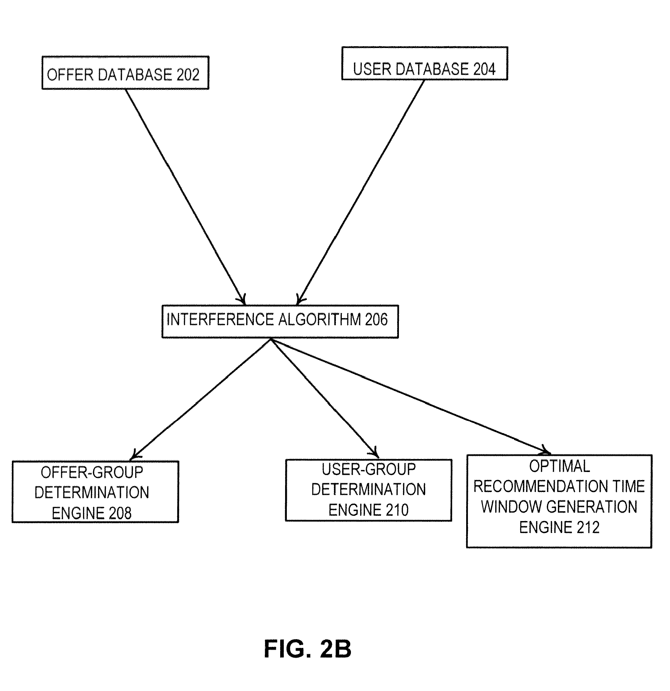

The offer-group determination engine, the user-group determination engine, and the optimal recommendation time window generation engine were created in a previous step, called the 'training step'. This step is illustrated in Fig. 2B. The inference algorithm 206 uses information about offers found in the offer database 202, and both current and historical information about users found in the user database 204 to determine the optimal form of the three engines. This inference algorithm then outputs the offer-group determination engine 208, user-group determination engine 210, and the optimal recommendation time window generation engine 212. In one embodiment, the inference algorithm performs this task by determining the engines that would optimize the delivery of recommendations on historical data.

FIG. 3 presents an exemplary block diagram illustrating the operation of the optimal recommendation time window generation engine 300 when weighted rather than hard group assignments are used. During operation, the system receives a specific offer ID 302 and user ID 304. It retrieves pertinent information (regarding the specific offer and user, as well as possibly additional offers and users, and other pertinent information) from the offer database 301 and the user database 303, and feeds them to a weight-generation mechanism 306. The weight-generation mechanism 306 generates offer weights 308 which are depicted as α*ᵢ* and user weights 310 which are depicted as β*ᵢ*. The extreme values of α*ᵢ* and β*ᵢ* can denote the two extreme cases for offer groups and user groups. For example, α*ᵢ* can be close to 0 if the offer 302 is unlikely to belong to offer group *i*, and α*ᵢ* can be close to 1 if the offer 302 is likely to belong to offer group *i*. Similarly, β*ᵢ* can be close to 0 if the user 304 is unlikely to belong to user group *i,* or β*ᵢ* can be close to 1 if the user 304 is likely to belong to user group *i.*

These weights are combined in a weight-matrix generation mechanism 312 to generate weight matrix 314. The dimensions of the weight matrix are the number of user groups and number of offer groups and the elements are the appropriately combined weights α*ᵢ* and β*ⱼ* corresponding to a specific user group *j* and an offer group *i*. In one embodiment, where α*ᵢ* and β*ⱼ* represent probabilities, the combination consists simply of the product α*ᵢ*β*ⱼ*. The time slot merit computation mechanism 324 then uses the optimal recommendation time window generation engine 330 to compute the optimal time window for each combination of a user group and an offer group, and weigh each time slot within the resulting time window by the combined weight from the weight matrix 314. It finally sorts the time slots in the decreasing order of merit and output the sorted time slots 326.

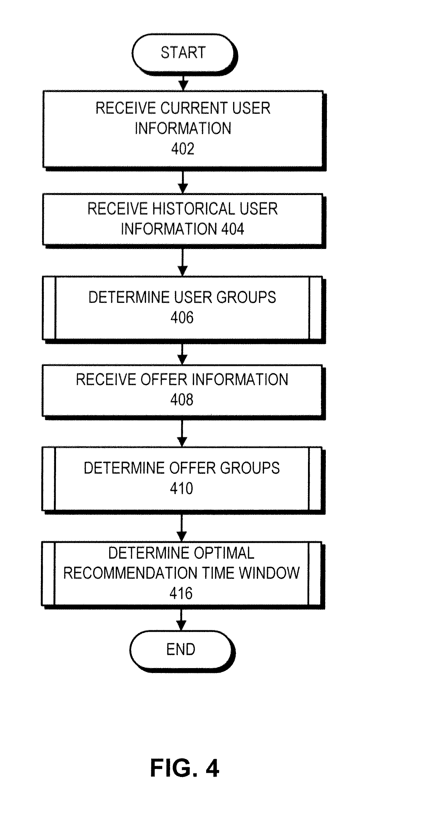

FIG. 4 presents a flow chart illustrating an exemplary process of determining an optimal recommendation time window for a given user and offer, in accordance with one embodiment of the present invention. During operation, the system receives current user information, such as demographics and location (operation 402) and historical information, such as click-through behavior (operation 404). The system then determines the appropriate group for the given user (operation 406). The system further receives information associated with offers (operation 408) and determines the appropriate group for the given offer (operation 410). Subsequently, based on the user group and the offer group, the system determines the optimal recommendation time window (operation 416).

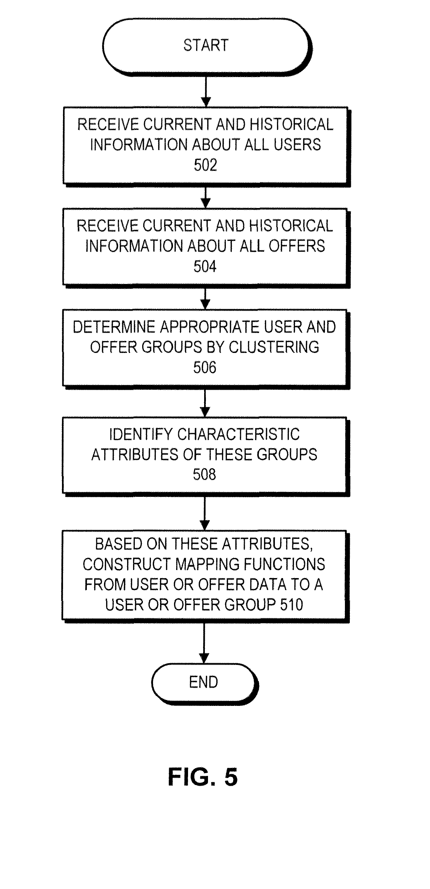

FIG. 5 presents a flow chart illustrating an exemplary process of determining, during a training stage, a mapping function from user data to user groups. Such mapping function could subsequently be used in the production stage to determine the user group for a given user, for example, in operation 406 in FIG. 4, in accordance with an embodiment of the present invention. During training, the system receives both current (such as location and demographics) and historical (such as click-through) information for all users (operation 502). The system also receives all the relevant information about all offers (operation 504). The system then determines the appropriate user and offer groups by clustering this information (operation 506). Once the groups are determined and it is known which user belongs to which group and which offer belongs to which group, the system identifies characteristic attributes of these groups (operation 508). Based on these attributes, the system then constructs two mapping functions, one from user information to a user group, and one from offer information to an offer group (operation 510). In one embodiment, the mapping function works by detecting the characteristic attributes in the data, and assigning the user or offer to the group whose characteristic attributes are most similar. The purpose of the mapping function is to efficiently assign a new user or offer to an appropriate group, without repeating the clustering with all users and offers.

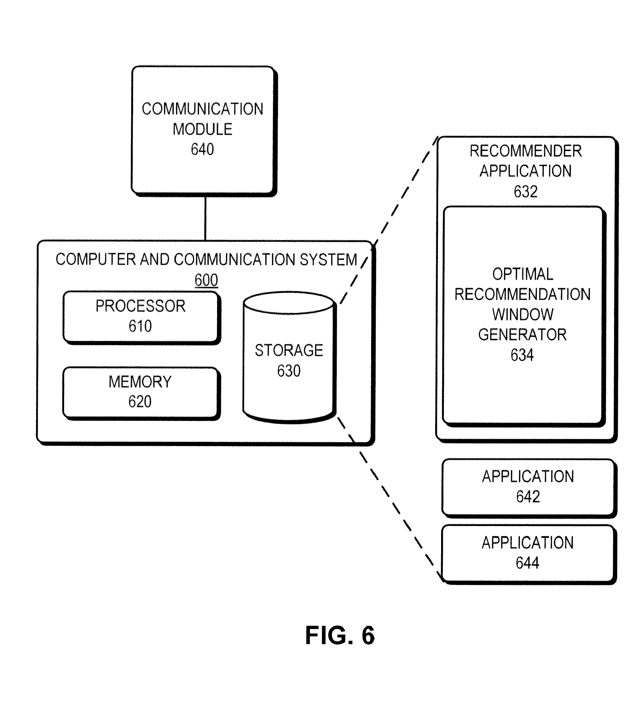

FIG. 6 illustrates an exemplary computer and communication system which facilitates determining an optimal recommendation time window in accordance with one embodiment of the present invention. A computer and communication system 600 is coupled to a communication module 640, and includes a processor 610, a memory 620, and a storage device 630. Storage device 630 stores a number of applications, such as applications 642 and 644. Storage device 630 also stores a recommender application 632, which includes an optimal recommendation window generator 634. During operation, recommender application 632 is loaded from storage device 630 into memory 620, and then executed by processor 610 to generate recommendation windows for the user.

The foregoing descriptions of embodiments of the present invention have been presented only for purposes of illustration and description. They are not intended to be exhaustive or to limit the present invention to the forms disclosed. Accordingly, many modifications and variations will be apparent to practitioners skilled in the art. Furthermore, features disclosed in association with a particular embodiment are generally intended as being interchangeable with other embodiments, unless the context indicates otherwise.

## Claims

1. A computer-executable method for delivering recommendations, the method comprising:
receiving, by a computer, information associated with a user, such as demographics and location;
receiving historical information on user preferences, such as click-through behavior on past recommendations;
receiving information associated with an offer; and
determining, based on the user information, click-through behavior, and offer information, an optimal time window for making a recommendation of the given offer to the given user, wherein the time window is a time-period during which a user is likely to be receptive to a recommendation.

2. The method of claim 1, the method further comprising:
calculating one or more variables for the user from the user information;
calculating one or more variables for each offer from the offer information; and
determining an optimal recommendation time window by using a regression on these variables.

3. The method of claim 1 or claim 2, the method further comprising:
determining an appropriate user group for the user;
determining an appropriate offer group for the offer; and
determining, based on the user information, click-through behavior, historical user preference information, user-group information, offer information, offer group information, and a user receptivity window for each user, an optimal time window for making a recommendation of the given offer to the given user.

4. The method of claim 3, wherein determining the user group comprises applying a mapping function from user information and historical preference information to the group appropriate for the user.

5. The method of claim 3, wherein determining offer group comprises applying a mapping function from offer information to the group appropriate for the offer.

6. The method of claim 3, wherein determining the optimal time slot for making a recommendation for a given user and offer comprises:
assigning a weight to each user group;
assigning a weight to each offer group;
determining a weight matrix, wherein the user groups correspond to one dimension of the matrix and the offer groups correspond to the other dimension, and wherein each element in the matrix is a combined weight obtained by appropriately combining a user-group weight and an offer-group weight;
for each user and offer group, incrementing the weight of each time slot in the optimal recommendation time window prescribed by that user and offer group; and
sorting the time slots by their total weights.

7. A non-transitory computer-readable storage medium storing instructions that when executed by a computer cause the computer to perform a method according to any of the preceding claims.

8. An apparatus for delivering recommendations, comprising:
a receiving mechanism configured to receive information associated with user, historical information on user preferences such as click-through behavior on past recommendations, and information associated with a number of offers; and
an optimal recommendation window determination mechanism configured to determine an optimal time window for making a recommendation to the user based on the user information, click-through behavior, and offer information.

9. The apparatus of claim 8, wherein the optimal recommendation window determination mechanism is further configured to:
calculate one or more variables for the user from the user information;
calculate one or more variables for each offer from the offer information; and
determine an optimal recommendation time window by using a regression on these variables.

10. The apparatus of claim 8 or claim 9, further including a classifying mechanism is further configured to:
determine the an appropriate user group for the user; and
determine the an appropriate offer group for the offer; and
wherein the optimal recommendation window determination mechanism is further configured to determine, based on the user information, click-through behavior, historical user preference information, and user-group information, offer information, and offer group information, a user receptivity window for each user, an optimal time window for making a recommendation of the given offer to the given user.

11. The apparatus of claim 10, wherein while determining the user group, the optimal recommendation window determination mechanism is further configured to apply a mapping function from user information and click-through behavior to the group appropriate for the user.

12. The apparatus of claim 10, wherein while determining the offer group, the optimal recommendation window determination mechanism is further configured to apply a mapping function from the offer information to the group appropriate for the offer.

13. The apparatus of claim 10, wherein while determining the optimal time slot for making a recommendation for a given user and offer, the optimal recommendation window determination mechanism is further configured to:
assign a weight to each user group;
assign a weight to each offer group;
determine a weight matrix, wherein the user groups correspond to one dimension of the matrix and the offer groups correspond to the other dimension, and wherein each element in the matrix is a combined weight obtained by appropriately combining a user-group weight and an offer-group weight;
for each user and offer group, incrementing the weight of each time slot in the optimal recommendation time window prescribed by that user and offer group; and
sort the time slots by their total weights.
